# EUROPÄISCHE PATENTSCHRIFT

(11) **EP 1 683 986 B1**
(45) Veröffentlichungstag und Bekanntmachung des Hinweises auf die Patenterteilung: **18.06.2008**
(21) Anmeldenummer: 05026528.9
(22) Anmeldetag: 05.12.2005
(51) Int. Cl.: F16D 65/56, F16D 65/14

(54) **Scheibenbremse mit Nachstelleinrichtung**
Disc brake with automatic adjustment
Frein à disque à réglage automatique

(30) Priorität: 24.01.2005 DE 102005003223
(43) Veröffentlichungstag der Anmeldung: 26.07.2006
(73) Patentinhaber: Haldex Brake Products AB, S-261 24 Landskrona (SE)
(72) Erfinder: Sandberg, Stefan, 23435 Lomma (SE); Severinsson, Lars, 310 21 Hishult (SE)
(74) Vertreter: Altenburg, Udo

(56) Entgegenhaltungen:
- EP-A- 0 614 025
- EP-A- 0 730 107
- WO-A-91/19115

## Beschreibung

Die vorliegende Erfindung betrifft eine Scheibenbremse gemäß Oberbegriff des Anspruchs 1, wie sie z.B. aus der EP-A-0 614 025 bekannt ist.

Die WO 91/19115 offenbart eine Scheibenbremse mit einer selbsttätigen Nachstelleinrichtung. Die Zuspannvorrichtung dieser Scheibenbremse beinhaltet einen Nockenhebel, der um eine zur Bremsscheibenebene paralelle Achse drehbar ist und über eine Traverse mit einer oder zwei Stellspindeln zusammenwirkt, gegen welche sich ein Bremsbelag abstützt. Die beiden Stellspindeln sind vermittels eines Zahnriemens gekoppelt. In eine Ausnehmung der einen Stellspindel ragt ein Drehantrieb, welcher vom Nockenhebel antreibbar ist und während des Anlegehubes ein Verschrauben der Stellspindel und damit über den Zahnriemen auch der Stellspindel in Annäherungsrichtung an die Bremsscheibe bewirkt. Der Drehantrieb beinhaltet eine Einwegdrehkupplung sowie eine Drehmoment-Begrenzungskupplung, wodurch ein Verschrauben der Stellspindeln während des Festbremshubes und des Lösehubes vermieden wird.

Die EP 0 730 107 B1 offenbart eine Scheibenbremse mit einem Druckstück, das sich parallel zur Bremsscheibenebene erstreckt und das bei Betätigung einer Zuspannvorrichtung unter Verdrehen eines Zuspannelementes einen Bremsbelag in Richtung der Achse einer Bremssscheibe gegen die Bremsscheibe drückt. Die Scheibenbremse weist eine Nachstellvorrichtung mit einer Einwegkupplung und einer Rutschkupplung auf zum selbsttätigen verschleißabhängigen Einstellen des Lüftspiels zwischen dem Bremsbelag und der Bremsscheibe, wobei die gesamte Nachstelleinrichtung derart mit dem Druckstück gekoppelt ist, dass sie beim Bremsen dessen Bewegung in Richtung der Bremsscheibenachse folgt.

Es ist die Aufgabe der vorliegenden Erfindung, eine Scheibenbremse mit einfachen Mitteln derart auszubilden, dass eine funktionssichere Nachstellung gewährleistet wird.

Diese Aufgabe wird durch eine Scheibenbremse gemäß Anspruch 1 gelöst. Die abhängigen Ansprüche betreffen vorteilhafte Ausgestaltungen der Erfindung.

Erfindungsgemäß weist die Scheibenbremse eine Nachstelleinrichtung mit einer ersten Baugruppe und einer zweiten Baugruppe auf, wobei die Nachstelleinrichtung eine Verbindungskupplung aufweist, die eine Übertragung einer Drehbewegung von der ersten Baugruppe auf die zweite Baugruppe ermöglicht, wobei die Verbindungskupplung eine axiale Relativbewegung zwischen der ersten Baugruppe und der zweiten Baugruppe der Nachstelleinrichtung zulässt. Eine derartige Kupplung kann beispielsweise als Klauenkupplung ausgebildet sein, so dass die Übertragung einer Drehbewegung von der ersten Baugruppe auf die zweite Baugruppe ermöglicht, wenn gleichzeitig eine axiale Relativbewegung zwischen der ersten Baugruppe und der zweiten Baugruppe der Nachstelleinrichtung erfolgt.

Durch diese Verbindungskupplung wird es ermöglicht, dass sich die zweite Baugruppe der Nachstelleinrichtung bei der Bremsbetätigung und/oder bei der Nachstellung relativ in axialer Richtung gegenüber der ersten Baugruppe der Nachstelleinrichtung bewegen kann. Auf diese Weise kann die erste Baugruppe beispielsweise in dem Gehäuse gelagert sein, wobei die zweite Baugruppe an dem Druckstück, das sich bei der Bremsbetätigung zur Bremsscheibe hin bewegt, angeordnet ist. Die Funktionsweise der ersten Baugruppe ist so unabhängig von den Bewegungen des Druckstückes. Außerdem können sich Schwingungen, die bei der Bremsbetätigung durch den Kontakt zwischen der Bremsscheibe und dem Bremsbelag entstehen, nicht so leicht auf die erste Baugruppe übertragen und so die Nachstellfunktion beeinträchtigen.

Die erste Baugruppe der Nachstelleinrichtung weist ein zylindrisches Element auf, das zwischen dem Gehäuse und dem Druckstück angeordnet ist. Ein Versatz des Druckstückes innerhalb einer Ebene, die parallel zur Bremsscheibe liegt, ist gegenüber dem Gehäuse möglich, ohne dass ein Verklemmen des zylindrischen Elements gegenüber Druckstück und Gehäuse erfolgt. Ein solcher Versatz des Druckstückes kann aufgrund der bei der Bremsbetätigung entstehenden hohen Kräfte entstehen, insbesondere wenn der Verschleiss des Bremsbelages unterschiedlich erfolgt. Indem ein Versatz des Druckstückes ohne Verklemmen des zylindrischen Elements bzw. der Nachstelleinrichtung möglich ist, ist eine funktionssichere Nachstellung gewährleistet, obwohl sich die zweite Baugruppe der Nachstelleinrichtung durch den Versatz des Druckstückes relativ gegenüber der ersten Baugruppe bewegt mit der Folge, dass die Achsen der Baugruppen der Nachstelleinrichtung nicht parallel und/oder zueinander verkippt sind.

Erfindungsgemäß ist vorgesehen, daß ein Verklemmen des zylindrischen Elements vermieden wird, indem eine Lagerung seines ersten Endes in dem Gehäuse und eine Lagerung seines zweiten Endes in dem Druckstück jeweils eine Kippbewegung zulässt. Dies kann erreicht werden, indem die Enden jeweils eine konvexe Wölbung bzw. eine sphärische Oberfläche aufweisen, die sich vorzugsweise über den gesamten Umfang des zylindrischen Elements am jeweiligen Ende erstreckt. Es kann aber an den Enden jeweils auch eine Scheibe vorgesehen sein, so dass mit dem Gehäuse bzw. mit dem Druckstück jeweils nur eine linienhafte Berührung stattfindet. Die entsprechende Aufnahme bzw. Lagerung des Gehäuses bzw. des Druckstückes kann dabei einfach eine zylindrische Ausnehmung sein oder eine konkave Wölbung bzw. eine angepasste sphärische Oberfläche aufweisen, um mit dem jeweiligen Ende des zylindrischen Elements derart zusammenzuwirken, dass an beiden Enden ein Verkippen des zylindrischen Elementes ohne Verklemmen möglich ist. Damit auch eine mögliche Verzahnung der Verbindungskupplung kein Verklemmen bewirkt, können auch die Flanken des Zahnes bzw. der Zähne eine entsprechende Wölbung bzw. sphärische Oberfläche aufweisen oder ein entsprechend großes Zahnspiel zu den zugehörigen Zahnlücken vorgesehen sein, um ein Verkippen zu ermöglichen.

Die Verbindungskupplung ermoglicht also eine verklemmungsfreie Übertragung einer Drehbewegung, auch wenn die Achse der ersten Baugruppe gegenüber der Achse der zweiten Baugruppe nicht koaxial und/oder nicht parallel ist.

Die Nachstelleinrichtung weist vorzugsweise eine Einwegkupplung und eine Rutschkupplung auf, die beide der ersten Baugruppe der Nachstelleinrichtung zugeordnet sein können. Sowohl die Einwegkupplung als auch die Rutschkupplung können als Schlingfedern ausgebildet sein.

Bei Betätigung der Zuspanneinrichtung kann vorteilhaft eine Drehbewegung eines Nachstellgehäuses, welches der ersten Baugruppe zugeordnet ist, eingeleitet werden, insbesondere über einen Antriebszapfen bzw. Antriebshebel, der gemeinsam mit der Zuspanneinrichtung bewegt wird. Dabei kann die erste Baugruppe eine Übertragungshülse aufweisen, die mit dem Nachstellgehäuse über die Rutschkupplung in Verbindung steht, und die mit dem zylindrischen Element über die Einwegkupplung in Verbindung steht. Es ist besonders vorteilhaft, wenn die Übertragungshülse einen inneren Hohlraum aufweist, so dass zumindestens Teilabschnitte der Einwegkupplung und/oder der Rutschkupplung darin angeordnet sein kann. Auf diese Weise kann eine sehr kompakte Bauweise in axialer Richtung erreicht werden, insbesondere wenn sowohl die Einwegkupplung als auch die Rutschkupplung als Schlingfedern ausgebildet sind, und wenn die Einwegkupplung radial innerhalb der Rutschkupplung angeordnet ist, oder umgekehrt.

Die zweite Baugruppe der Nachstelleinrichtung weist vorzugsweise eine Nachstellhülse mit Innengewinde und eine darin gelagerte Nachstellschraube auf, wobei die Nachstellhülse mit Innengewinde an dem Druckstück gelagert ist. Die Nachstellschraube ist gegen eine Verdrehung gesichert, so dass eine Drehbewegung, die über die Verbindungskupplung übertragen wurde, in einer axialen Verstellung der Gewindespindel resultiert.

Wenn als Zuspanneinrichtung ein Exzentermechanismus vorgesehen ist, ist es vorteilhaft, wenn in der Achse des Exzentermechanismus ein konzentrisch angeordneter Fixierungszapfen vorgesehen ist, der die erste Baugruppe in axialer Richtung gegenüber dem Gehäuse festlegt, und der insbesondere mit der Übertragungshülse in Verbindung steht. Die Übertragungshülse weist dabei eine in Umfangsrichtung erstreckende Ausnehmung bzw. Nut oder einen Kragen auf, in welche bzw. in welchen der Fixierungszapfen eingreift, so dass eine Drehung der Übertragunghülse bei axialer Fixierung möglich ist. Auf diese Weise ist die Montage der Scheibenbremse vereinfacht, da durch den Einbau des Exzentermechanismus gleichzeitig eine axiale Fixierung der Übertragungshülse bzw. der ersten Baugruppe erreicht wird.

Die Ausführungsbeispiele der Erfindung werden nachstehend anhand der folgenden Zeichnungen näher erläutert.
- Fig. 1: zeigt eine Querschnittsdarstellung einer Ausführungsform einer Scheibenbremse nach der vorliegenden Erfindung;
- Fig. 2: zeigt eine Querschnittsdarstellung in Bezug auf die Trennlinie E - E der Fig. 1;
- Fig. 3: zeigt eine vergrößerte Ansicht des Details B der Fig. 1;
- Fig. 4: zeigt eine vergrößerte Ansicht des Details A der Fig. 1; und
- Fig. 5: zeigt eine vergrößerte Ansicht eines Querschnittes im Bereich der Nachstelleinrichtung einer Scheibenbremse gemäß Fig. 1.

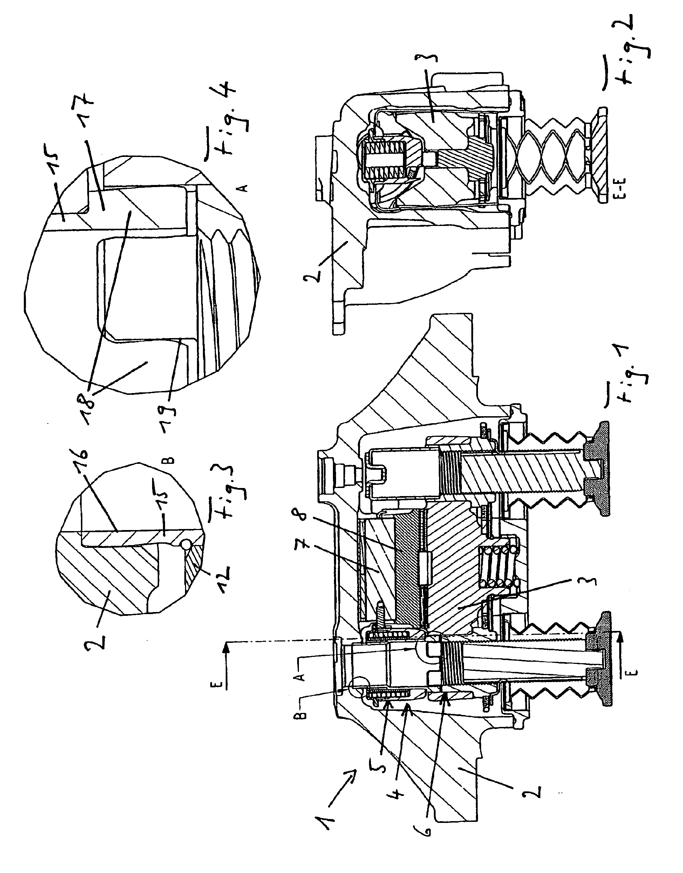

**Fig. 1** und **2** zeigen eine Scheibenbremse **1** mit einem Gehäuse **2,** einer Zuspannvorrichtung, die einen Exzentermechanismus **7, 8** aufweist, einem Druckstück **3** und einer selbsttätigen, verschleißabhängigen Nachstelleinrichtung **4,** wobei die Nachstelleinrichtung **4** eine erste Baugruppe **5** und eine zweite Baugruppe **6** aufweist. Die Nachstelleinrichtung **4** weist eine Verbindungskupplung auf, die eine Übertragung einer Drehbewegung von der ersten Baugruppe **5** auf die zweite Baugruppe **6** ermöglicht, wobei die Verbindungskupplung eine axiale Relativbewegung zwischen der ersten Baugruppe **5** und der zweiten Baugruppe **6** der Nachstelleinrichtung **4** zulässt.

In dem dargestellten Ausführungsbeispiel ist diese Verbindungskupplung als Klauenkupplung ausgebildet, deren vier Zähne **18** der ersten Baugruppe **5** in entsprechende Zahnlücken **19** der zweiten Baugruppe 6 eingreifen, wie in der **Fig. 4** dargestellt ist, die eine vergrößerte Ansicht des Details **A** der **Fig. 1** zeigt. Die vier Zähne **18** der Klauenkupplung sind am unteren Ende **17** eines zylindrischen Elementes **15** ausgebildet, welches Bestandteil der ersten Baugruppe **4** ist. Da die Zähne **18** am Umfang des zylindrischen Elementes **15** angeordnet sind, ist der in der **Fig. 4** rechte Zahn **18** im Schnitt dargestellt, und der in **Fig. 4** linke Zahn **18** von der Innenseite des zylindrischen Elements **15** her dargestellt.

Durch die Klauenkupplung ist die Übertragung einer Drehbewegung von der ersten Baugruppe **5** auf die zweite Baugruppe **6** möglich, wenn gleichzeitig eine axiale Relativbewegung zwischen der ersten Baugruppe **5** und der zweiten Baugruppe **6** der Nachstelleinrichtung **4** erfolgt. Damit wird es ermöglicht, dass sich die zweite Baugruppe **6** der Nachstelleinrichtung **4** bei der Bremsbetätigung und/oder bei der Nachstellung relativ in axialer Richtung gegenüber der ersten Baugruppe **5** der Nachstelleinrichtung **4** bewegen kann. Auf diese Weise kann die erste Baugruppe **5** beispielsweise in dem Gehäuse **2** gelagert sein, wie dies in **Fig. 1** zu sehen ist, und die zweite Baugruppe **6** kann an dem Druckstück **3,** das sich bei der Bremsbetätigung zur (nicht dargestellten) Bremsscheibe hin bewegt (in Fig. 1 also nach unten), angeordnet sein. Die Funktionsweise der ersten Baugruppe **5** ist so unabhängig von den Bewegungen des Druckstückes **3.** Außerdem können sich Schwingungen, die bei der Bremsbetätigung durch den Kontakt zwischen der Bremsscheibe und dem Bremsbelag entstehen, nicht so leicht auf die erste Baugruppe **5** übertragen und so die Nachstellfunktion beeinträchtigen.

Die Klauenkupplung als Verbindungskupplung ermöglicht eine eineindeutige Übertragung der Drehbewegung, also eindeutige Beziehung der Drehbewegungen der ersten Baugruppe **5** gegenüber der zweiten Baugruppe **6** sowohl bei einer Drehung in einer Richtung als auch bei einer Drehung in der entgegengesetzten Richtung.

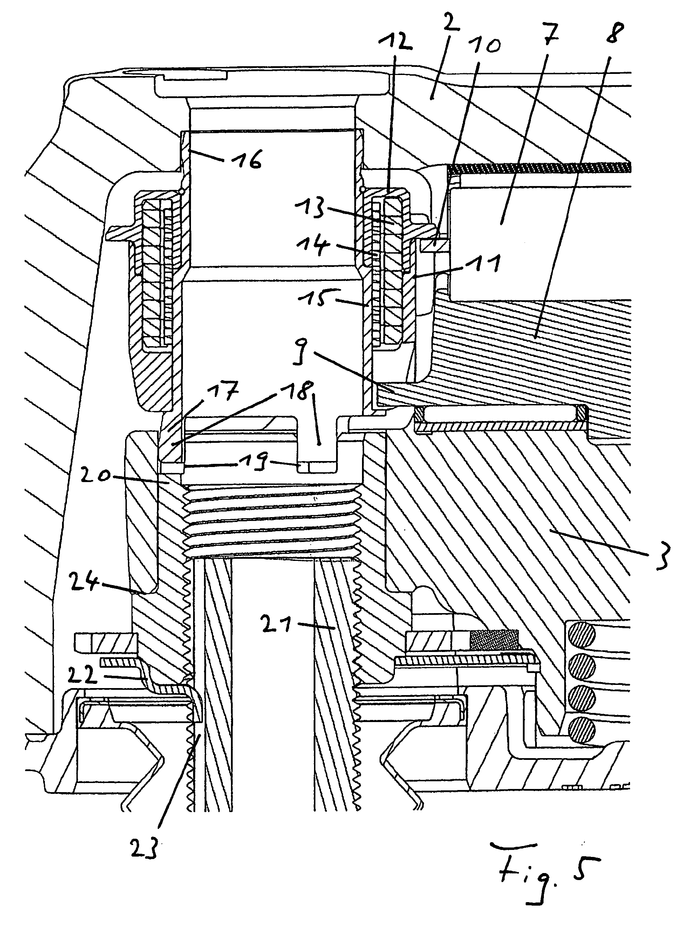

Wie in **Fig. 5** dargestellt ist, weist die erste Baugruppe **5** der Nachstelleinrichtung **4** weist ein zylindrisches Element **15** auf, das zwischen dem Gehäuse **2** und dem Druckstück **3** angeordnet ist. Bei dem dargestellten Ausführungsbeispiel ist ein Versatz des Druckstückes **3** innerhalb einer Ebene, die parallel zur Bremsscheibe liegt, gegenüber dem Gehäuse **2** möglich (in Fig. 5 also z.B. nach rechts), ohne dass ein Verklemmen des zylindrischen Elements **15** gegenüber Druckstück **3** und Gehäuse **2** erfolgt. Ein solcher Versatz des Druckstückes **3** kann aufgrund der bei der Bremsbetätigung entstehenden hohen Kräfte entstehen, insbesondere wenn der Verschleiss des Bremsbelages unterschiedlich erfolgt. Indem ein Versatz des Druckstückes ohne Verklemmen des zylindrischen Elements **15** bzw. der Nachstelleinrichtung **4** möglich ist, ist eine funktionssichere Nachstellung gewährleistet, obwohl sich die zweite Baugruppe **6** der Nachstelleinrichtung **4** durch den Versatz des Druckstückes **3** relativ gegenüber der ersten Baugruppe **5** bewegt mit der Folge, dass die Achsen der Baugruppen **5, 6** der Nachstelleinrichtung **4** nicht parallel und/oder zueinander verkippt sind.

Ein Verklemmen des zylindrischen Elements bzw. der Nachstelleinrichtung kann vermieden werden, indem die Lagerung des ersten Endes **16** des zylindrischen Elements **15** in dem Gehäuse **2** und die Lagerung des zweiten Endes **17** des zylindrischen Elements **15** in dem Druckstück **3** jeweils eine Kippbewegung zulässt. Dies kann erreicht werden, indem die Enden **16, 17** jeweils eine konvexe Wölbung bzw. eine sphärische Oberfläche aufweisen, wie in den **Fig. 3** und **4** dargestellt ist. Die konvexe Wölbung bzw. die sphärische Oberfläche erstreckt sich vorzugsweise über den gesamten Umfang des zylindrischen Elements **15** am jeweiligen Ende **16** bzw. **17.**

Es kann aber alternativ an den Enden **16, 17** jeweils auch eine Scheibe vorgesehen sein, so dass mit dem Gehäuse **2** bzw. mit dem Druckstück **3** jeweils nur eine linienhafte Berührung stattfindet. Die entsprechende Aufnahme bzw. Lagerung des Gehäuses **2** bzw. des Druckstückes **3** kann dabei einfach eine zylindrische Ausnehmung sein oder eine konkave Wölbung bzw. eine angepasste sphärische Oberfläche aufweisen, um mit dem jeweiligen Ende **16, 17** des zylindrischen Elements **15** derart zusammenzuwirken, dass an beiden Enden **16, 17** ein Verkippen des zylindrischen Elementes ohne Verklemmen möglich ist.

Damit auch die Verzahnung der Verbindungskupplung kein Verklemmen bewirkt, weisen auch die Flanken der Zähne **18** eine entsprechende Wölbung bzw. sphärische Oberfläche. Es ist jedoch auch möglich, ein entsprechend großes Zahnspiel der Zähne **18** gegenüber den zugehörigen Zahnlücken **19** vorzusehen, um ein Verkippen zu ermöglichen.

Wie in **Fig. 5** zu sehen ist, weist die Nachstelleinrichtung des Ausführungsbeispiels eine Einwegkupplung **14** und eine Rutschkupplung **13** auf, die beide der ersten Baugruppe **5** der Nachstelleinrichtung **4** zugeordnet sind. Sowohl die Einwegkupplung **14** als auch die Rutschkupplung **13** können als Schlingfedern ausgebildet sein. Bei Betätigung der Zuspanneinrichtung, also des Exzentermechanismus **7, 8** wird eine Drehbewegung eines Nachstellgehäuses **11** erreicht, indem sich einen Antriebszapfen bzw. Antriebshebel **9,** der gemeinsam mit der Zuspanneinrichtung betätigt wird, etwa innerhalb einer Ebene, die parallel zur Bremsscheibe liegt, bewegt. In der **Fig. 5** bewegt sich der Antriebszapfen bzw. Antriebshebel **9** also senkrecht zur Darstellungsebene, da der Exzenter **8** um die Achswelle **7** verschwenkt wird.

Die so bei einer Bremsbetätigung eingeleitete Drehbewegung des Nachstellgehäuses **11** wird über die Rutschkupplung **13** auf die Übertragungshülse **12** übertragen, die drehbar gelagert ist, jedoch über einen Fixierungszapfen **10** axial fixiert wird, der in dem dargestellten Ausführungsbeispiel konzentrisch in der Achswelle 7 des Exzentermechanismus angeordnet ist. Bei einer Bremsbetätigung verdreht sich die Achsewelle **7** gemeinsam mit dem Fixierungszapfen **10,** ohne dass sich der Fixierungszapfen **10** aufgrund seiner konzentrischen Anordnung in axialer Richtung bewegt. Die Übertragungshülse **12** weist dabei einen in Umfangsrichtung erstreckenden Kragen auf, in welche der Fixierungszapfen eingreift, so dass eine Drehung der Übertragunghülse **12** bei axialer Fixierung möglich ist. Auf diese Weise ist die Montage der Scheibenbremse vereinfacht, da durch den Einbau des Exzentermechanismus gleichzeitig eine axiale Fixierung der Übertragungshülse **12** bzw. der ersten Baugruppe 5 erreicht wird.

Die Drehung der Übertragungshülse **12** wird über die Einwegkupplung **14** auf das zylindrische Element **15** übertragen, und von dem zylindrischen Element **15** über die Klauen- bzw. Verbindungskupplung auf eine Nachstellhülse **20** mit Innengewinde. Weiter ist eine Nachstellschraube **21** vorgesehen, die im Eingriff mit dem Innengewinde der Nachstellhülse **20** steht. Die Nachstellschraube **21** weist eine parallel zu ihrer Achse verlaufende Nut **23** auf, in die ein Zapfen bzw. Hebel **22** eingreift, so dass sich die Nachstellschraube **21** nicht gegenüber dem Drückstück **3** verdrehen kann. Wenn also eine Drehbewegung über die Verbindungskupplung auf die Nachstellhülse **20** übertragen wird, so findet aufgrund der drehfesten Lagerung der Nachstellschraube **21** ein Herausschrauben der Nachstellschraube **21** statt.

Bei normaler Bremsbetätigung wird zwar eine Drehbewegung in das Nachstellgehäuse **11** eingeleitet. Durch die Betätigung der Zuspanneinrichtung wird jedoch das Druckstück **3** in Richtung der Bremsscheibe über das normale Lüftungsspiel hinweg zugestellt, so dass bei weiterer Zustellung die Bremsscheibe über die Bremsbacken und über die Nachstellschraube **21** eine sehr hohe Gegenkraft erzeugt. Bei normaler Bremsbetätigung findet so eine Selbsthemmung in Bezug auf eine Drehbewegung der Nachstellhülse **20** statt, da die Haftreibung in einer Kontaktfläche **24** zwischen Nachstellhülse **20** und Druckstück **3** aufgrund der hohen Gegenkraft der Bremsscheibe eine Verdrehung der Nachstellhülse **20** verhindert. Das Nachstellgehäuse dreht sich bei weiterer Betätigung der Zuspannvorrichtung zwar weiter, jedoch rutscht die Rutschkupplung **13** einfach durch, so dass keine weitere Verdrehung der Übertragungshülse **12** und der nachfolgenden Elemente der Nachstelleinrichtung erfolgt. Dabei wird angemerkt, dass die Schlingfeder als Rutschkupplung **13** derart gewickelt ist, dass eine Verdrehung des Nachstellgehäuses, die einer Bremsbetätigung entspricht, eine Verkleinerung des Durchmessers der Schlingfeder **13** bewirken würde, sofern das in **Fig. 5** dargestellte obere Ende der Schlingfeder **13** fixiert wäre.

Beim Lösen der Bremse dreht sich das Nachstellgehäuse **11** in entgegengesetzter Richtung. Dabei wird das zylindrische Element 15 jedoch nicht zurückgedreht, da die zweite Schlingfeder als Einwegkupplung **14** in entgegengesetzter Richtung keine nennenswertes Drehmoment übertragen kann, da in dieser Richtung ein Aufwickeln der Schlingfeder **14** erfolgen würde, sofern das in **Fig. 5** dargestellte obere Ende der Schlingfeder **14** fixiert wäre.

Ist ein zu großer Verschleiss des Bremsbelages gegeben, erfolgt bei einer Bremsbetätigung eine weitere Verdrehung der Nachstelleinrichtung **4,** als dies bei einer normalen Bremsbetätigung der Fall ist. Die Nachstellschraube **21** wird so aus der Nachstellhülse **20** herausgedreht, bis über die Fläche **24** eine Selbsthemmung stattfindet. Eine Rückstellung dieser Nachstellung wird durch die Einwegkupplung **14** verhindert.

Es ist besonders vorteilhaft, wenn die Übertragungshülse **12,** wie in **Fig. 5** dargestellt ist, einen inneren Hohlraum aufweist, so dass Teilabschnitte der Einwegkupplung und der Rutschkupplung darin angeordnet sind. Auf diese Weise kann eine sehr kompakte Bauweise in axialer Richtung erreicht werden, insbesondere wenn die Einwegkupplung **14** als auch die Rutschkupplung **13** als Schlingfedern ausgebildet sind, und wenn die Einwegkupplung **14** radial innerhalb der Rutschkupplung **13** angeordnet ist, oder umgekehrt.

In **Fig. 1** ist auf der rechten Seite ist eine zweite Nachstellhülse mit einer zweiten Nachstellschraube dargestellt. Eine Verdrehung der ersten Nachstellhülse 20 kann über Ritzel und einen Zahnriemen auf die zweite Nachstellhülse übertragen werden, so dass eine gleichmäßige Nachstellung erfolgt. Erfindungsgemäß kann aber auch eine einzige Nachstellspindel vorgesehen werden, die insbesondere zentral im Druckstück angeordnet ist.

Im Ausführungsbeispiel ist als Zuspannvorrichtung ein Exzentermechanismus vorgesehen. Dem Fachmann ist jedoch bekannt, dass ein Kugel-Rampen-Mechanismus ebenso gleichwirkend als Zuspannvorrichtung vorgesehen werden kann.

## Patentansprüche

1. Scheibenbremse mit einem Gehäuse, einer Zuspannvorrichtung (7, 8), einem Druckstück (3) und einer selbsttätigen Nachstelleinrichtung (4),
wobei die Nachstelleinrichtung (4) eine erste Baugruppe (5), eine zweite Baugruppe (6) und eine Verbindungskupplung aufweist,
die eine Übertragung einer Drehbewegung von der ersten Baugruppe (5) auf die zweite Baugruppe (6) ermöglicht, und die eine axiale Relativbewegung zwischen der ersten Baugruppe (5) und der zweiten Baugruppe (6) der Nachstelleinrichtung (4) zulässt, und
wobei die erste Baugruppe (5) ein zylindrisches Element (15) aufweist, das zwischen dem Gehäuse (2) und dem Druckstück (3) angeordnet ist,
**dadurch gekennzeichnet,**
**dass** bei der Bremsbetätigung ein Verklemmen des zylindrischen Elements (15) vermieden wird, indem eine Lagerung seines ersten Endes (16) in dem Gehäuse (2) und eine Lagerung seines zweiten Endes (17) in dem Druckstück (3) jeweils eine Kippbewegung zulässt.

2. Scheibenbremse nach Anspruch 1, **dadurch gekennzeichnet, dass** die Verbindungskupplung die Übertragung einer Drehbewegung von der ersten Baugruppe (5) auf die zweite Baugruppe (6) ermöglicht, wenn gleichzeitig eine axiale Relativbewegung zwischen der ersten Baugruppe (5) und der zweiten Baugruppe (6) der Nachstelleinrichtung (4) erfolgt.

3. Scheibenbremse nach Anspruch 1 oder 2, **dadurch gekennzeichnet, dass** die Verbindungskupplung in beiden Drehrichtungen eine Übertragung einer Drehbewegung von der ersten Baugruppe (5) auf die zweite Baugruppe (6) ermöglicht.

4. Scheibenbremse nach einem der vorhergehenden Ansprüche, **dadurch gekennzeichnet, dass** das zweite Ende (17) des zylindrischen Elements (15) ein ausreichendes Spiel gegenüber dem Druckstück (3) aufweist.

5. Scheibenbremse nach einem der vorhergehenden Ansprüche, **dadurch gekennzeichnet, dass** die Verbindungskupplung eine verklemmungsfreie Übertragung einer Drehbewegung ermöglicht, auch wenn die Achse der ersten Baugruppe (5) gegenüber der Achse der zweiten Baugruppe (6) nicht koaxial ist.

6. Scheibenbremse nach einem der vorhergehenden Ansprüche, **dadurch gekennzeichnet, dass** die Verbindungskupplung eine verklemmungsfreie Übertragung einer Drehbewegung ermöglicht, auch wenn die Achse der ersten Baugruppe (5) gegenüber der Achse der zweiten Baugruppe (6) nicht parallel ist.

7. Scheibenbremse nach einem der vorhergehenden Ansprüche, **dadurch gekennzeichnet, dass** die zweite Baugruppe (6) der Nachstelleinrichtung (4) mit dem Druckstück (3) gekoppelt ist, das bei der Bremsbetätigung der Zuspanneinrichtung (7, 8) in Richtung der Bremsscheibe gedrückt wird.

8. Scheibenbremse nach einem der vorhergehenden Ansprüche, **dadurch gekennzeichnet, dass** die Nachstelleinrichtung (4) eine Einwegkupplung (14) aufweist, die insbesondere als Schlingfeder ausgebildet ist, und die insbesondere der ersten Baugruppe (5) der Nachstelleinrichtung (4) zugeordnet ist.

9. Scheibenbremse nach einem der vorhergehenden Ansprüche, **dadurch gekennzeichnet, dass** die Nachstelleinrichtung (4) eine Rutschkupplung (13) aufweist, die insbesondere als Schlingfeder ausgebildet ist, und die insbesondere der ersten Baugruppe (5) der Nachstelleinrichtung (4) zugeordnet ist.

10. Scheibenbremse nach einem der vorhergehenden Ansprüche, **dadurch gekennzeichnet, dass** bei Betätigung der Zuspanneinrichtung (7, 8) eine Drehbewegung eines Nachstellgehäuses (11), welches der ersten Baugruppe (5) zugeordnet ist, eingeleitet wird, insbesondere über einen Antriebszapfen bzw. Antriebshebel (9), der gemeinsam mit der Zuspanneinrichtung (7, 8) bewegt wird.

11. Scheibenbremse nach einem der vorhergehenden Ansprüche, **dadurch gekennzeichnet, dass** die erste Baugruppe (5) eine Übertragungshülse (12) aufweist, die mit dem Nachstellgehäuse (11) über die Rutschkupplung (13) in Verbindung steht.

12. Scheibenbremse nach Anspruch 11, **dadurch gekennzeichnet, dass** die Übertragungshülse (12) mit dem zylindrischen Element (15) über die Einwegkupplung (14) in Verbindung steht.

13. Scheibenbremse nach einem der vorhergehenden Ansprüche, **dadurch gekennzeichnet, dass** die zweite Baugruppe (6) der Nachstelleinrichtung (4) eine Nachstellhülse (20) mit Innengewinde und eine darin gelagerte Nachstellschraube (21) aufweist, wobei die Nachstellhülse (20) mit Innengewinde an dem Druckstück (3) gelagert ist.

14. Scheibenbremse nach Anspruch 13, **dadurch gekennzeichnet, dass** die Nachstellschraube (21) gegen eine Verdrehung gesichert ist, so dass eine Drehbewegung, die über die Verbindungskupplung übertragen wurde, in einer axialen Verstellung der Nachstellschraube (21) resultiert.

15. Scheibenbremse nach einem der vorhergehenden Ansprüche, **dadurch gekennzeichnet, dass** die Zuspanneinrichtung (7, 8) ein Exzentermechanismus ist.

16. Scheibenbremse nach Anspruch 15, **dadurch gekennzeichnet, dass** in der Achse des Exzentermechanismus ein konzentrisch angeordneter Fixierungszapfen (10) vorgesehen ist, der die erste Baugruppe (5) in axialer Richtung gegenüber dem Gehäuse (2) festlegt, und der insbesondere mit der Übertragungshülse (12) in Verbindung steht.

17. Scheibenbremse nach einem der Ansprüche 1 bis 14, **dadurch gekennzeichnet, dass** die Zuspanneinrichtung ein Kugel-Rampen-Mechanismus ist.

18. Scheibenbremse nach einem der vorhergehenden Ansprüche, **dadurch gekennzeichnet, dass** die Verbindungskupplung eine Klauenkupplung ist.

## Claims

1. A disc brake having a housing (2), a clamping device (7, 8), a push rod (3), and a self-activating adjustment device (4), whereby the adjustment device (4) includes a first subassembly (5), a second subassembly (6) and an assembly joint,
which makes possible the transmission of rotary motion from the first subassembly (5) to the second subassembly (6), and which allows an axial relative motion between the first subassembly (5) and the second subassembly (6) of the adjustment device (4), and
whereby the first subassembly (5) comprises a cylindrical element (15) arranged between the housing (2) and the push rod (3),
**characterized in that**
during brake actuation, a jamming of the cylindrical element (15) is avoided **in that** a bearing of its first end (16) in the housing (2) and a bearing of its second end (17) in the push rod (3) admits respectively a tilting motion.

2. The disc brake according to claim 1, **characterized in that** the assembling joint makes possible the transmission of a rotary motion form the first subassembly (5) to the second subassembly (6), if simultaneously, an axial relative motion occurs between the first subassembly (5) and the second subassembly (6) of the adjustment device (4).

3. The disc brake according to claim 1 or 2, **characterized in that** the assembling joint makes possible in both rotary directions a transmission of a rotary motion from the first subassembly (5) to the second subassembly (6).

4. The disc brake according to one of the foregoing claims, **characterized in that** the second end (17) of the cylindrical element (15) includes a sufficient tolerance with respect to the push rod (3).

5. The disc brake according to one of the foregoing claims, **characterized in that** the assembling joint makes possible a transmission of a rotary motion free from jamming, even if the axle of the first subassembly (5) is not coaxial with the axle of the second subassembly (6).

6. The disc brake according to one of the foregoing claims, **characterized in that** the assembling joint makes possible a transmission of a rotary motion free from jamming, even if the axle of the first subassembly (5) is not parallel to the axle of the second subassembly (6).

7. The disc brake according to one of the foregoing claims, **characterized in that** the second subassembly (6) of the adjustment device (4) is coupled with the push rod (3), which is pressed in the direction of the disc brake upon brake actuation of the clamping device (7, 8).

8. The disc brake according to one of the foregoing claims, **characterized in that** the adjustment device (4) includes an one-way coupling (14), which is in particular configured as a looped spring and which is in particular associated with the first subassembly (5) of the adjustment device (4).

9. The disc brake according to one of the foregoing claims, **characterized in that** the adjustment device (4) includes a friction clutch (13), which is in particular configured as a looped spring, and which is in particular associated with the first subassembly (5) of the adjustment device (4).

10. The disc brake according to one of the foregoing claims, **characterized in that** upon actuation of the clamping device (7, 8), a rotary motion of an adjustment housing (11) is introduced, which is associated with the first subassembly (5), in particular by means of a drive pivot and a drive gear (9), respectively, which is moved together with the clamping device (7, 8).

11. The disc brake according to one of the foregoing claims, **characterized in that** the first subassembly (5) includes a transmission sleeve (12), which is engaged with the adjustment housing (11) by means of the friction clutch (13).

12. The disc brake according to claim 11, **characterized in that** the transmission sleeve (12) is engaged with the cylindrical element (15) by means of the one-way coupling (14).

13. The disc brake according to one of the foregoing claims, **characterized in that** the second subassembly (6) of the adjustment device (4) includes an adjustment sleeve (20) with an inner threading and, positioned in it, an adjustment screw (21), whereby the adjustment sleeve (20) is positioned with the inner threading on the push rod (3).

14. The disc brake according to claim 13, **characterized in that** the adjustment screw (21) is assured against rotation, so that a rotary motion transmitted by the assembling joint, results in an axial displacement of the adjustment screw (21).

15. The disc brake according to one of the foregoing claims, **characterized in that** the clamping device (7, 8) is an eccentric mechanism.

16. The disc brake according to claim 15, **characterized in that** in the axle of the eccentric mechanism a concentrically positioned fixation pivot (10) is provided, which holds the first subassembly (5) in an axial direction with respect to the housing (2), and which is in particular connected with a transmission sleeve (12).

17. The disc brake according to one of the claims 1 to 14, **characterized in that** the tightening device is a ball-ramp mechanism.

18. The disc brake according to one of the foregoing claims, **characterized in that** the assembling joint is a claw clutch.

## Revendications

1. Frein à disque comprenant un carter, un dispositif de serrage (7, 8), une pièce de pression (3) et un dispositif de réajustage (4), le dispositif de réajustage (4) comprenant un premier ensemble structurel (5), un second ensemble structurel (6) et un accouplement de liaison, lequel permet de transmettre un mouvement de rotation du premier ensemble structurel (5) au second ensemble structurel (6) et autorise un mouvement relatif radial entre le premier ensemble structurel (5) et le second ensemble structurel (6) du dispositif de réajustage (4), le premier ensemble structurel (5) comportant un élément cylindrique (15) disposé entre le carter (2) et la pièce de pression (3), **caractérisé en ce que**, lors de l'actionnement du frein, un coincement de l'élément cylindrique (15) est évité par le fait que le positionnement de sa première extrémité (16) dans le carter (2) et le positionnement de sa seconde extrémité (17) dans la pièce de pression (3) autorise à chaque fois un mouvement de basculement.

2. Frein à disque selon la revendication 1, **caractérisé en ce que** l'accouplement de liaison permet de transmettre un mouvement de rotation du premier ensemble structurel (5) au second ensemble structurel (6) lorsque se produit en même temps un mouvement relatif radial entre le premier ensemble structurel (5) et le second ensemble structurel (6) du dispositif de réajustage (4).

3. Frein à disque selon la revendication 1 ou 2, **caractérisé en ce que** l'accouplement de liaison permet de transmettre dans les deux directions de rotation un mouvement de rotation du premier ensemble structurel (5) au second ensemble structurel (6).

4. Frein à disque selon une des revendications précédentes, **caractérisé en ce que** la seconde extrémité (17) de l'élément cylindrique (15) présente un jeu suffisant par rapport à la pièce de pression (3).

5. Frein à disque selon une des revendications précédentes, **caractérisé en ce que** l'accouplement de liaison permet de transmettre un mouvement de rotation sans coincement, même lorsque l'axe du premier ensemble structurel (5) n'est pas coaxial à celui du second ensemble structurel (6).

6. Frein à disque selon une des revendications précédentes, **caractérisé en ce que** l'accouplement de liaison permet de transmettre un mouvement de rotation sans coincement, même lorsque l'axe du premier ensemble structurel (5) n'est pas parallèle à celui du second ensemble structurel (6).

7. Frein à disque selon une des revendications précédentes, **caractérisé en ce que** le second ensemble structurel (6) du dispositif de réajustage (4) est accouplé à la pièce de pression (3), laquelle est poussée en direction du disque de frein lors de l'actionnement du frein par le dispositif de serrage (7, 8) .

8. Frein à disque selon une des revendications précédentes, **caractérisé en ce que** le dispositif de réajustage (4) comporte un accouplement unidirectionnel (14), lequel est conformé en particulier en accouplement à ressort enroulé et est associé en particulier au premier ensemble structurel (5) du dispositif de réajustage (4).

9. Frein à disque selon une des revendications précédentes, **caractérisé en ce que** le dispositif de réajustage (4) comporte un accouplement à glissement (13), lequel est conformé en particulier en accouplement à ressort enroulé et est associé en particulier au premier ensemble structurel (5) du dispositif de réajustage (4).

10. Frein à disque selon une des revendications précédentes, **caractérisé en ce que** lors de l'actionnement du dispositif de serrage (7, 8) est induit un mouvement de rotation d'un carter de réajustage (11) associé au premier ensemble structurel (5), en particulier par l'intermédiaire d'un talon d'entraînement, respectivement d'un levier d'entraînement (9) déplacé conjointement avec le dispositif de serrage (7, 8).

11. Frein à disque selon une des revendications précédentes, **caractérisé en ce que** le premier ensemble structurel (5) comporte un manchon de transmission (12) qui est relié au carter de réajustage (11) par l'intermédiaire de l'accouplement à glissement (13).

12. Frein à disque selon la revendication 11, **caractérisé en ce que** le manchon de transmission (12) est relié à l'élément cylindrique (15) par l'intermédiaire de l'accouplement unidirectionnel (14).

13. Frein à disque selon une des revendications précédentes, **caractérisé en ce que** le second ensemble structurel (6) du dispositif de réajustage (4) comporte un manchon de réajustage (20) à taraudage et, logée à l'intérieur, une vis de réajustage (21), le manchon de réajustage (20) à taraudage étant monté contre la pièce de pression (3).

14. Frein à disque selon la revendication 13, **caractérisé en ce que** la vis de réajustage (21) est bloquée en rotation, de sorte qu'un mouvement de rotation transmis par l'intermédiaire de l'accouplement de liaison se traduit par un déplacement axial de la vis de réajustage (21).

15. Frein à disque selon une des revendications précédentes, **caractérisé en ce que** le dispositif de serrage (7, 8) est un mécanisme à excentrique.

16. Frein à disque selon la revendication 15, **caractérisé en ce que** dans l'axe du mécanisme à excentrique est prévu un talon de blocage concentrique (10) qui immobilise le premier ensemble structurel (5) dans la direction axiale par rapport au carter (2) et qui est relié en particulier au manchon de transmission (12).

17. Frein à disque selon une des revendications 1 à 14, **caractérisé en ce que** le dispositif de serrage est un dispositif avec rampe à billes.

18. Frein à disque selon une des revendications précédentes, **caractérisé en ce que** l'accouplement de liaison est un accouplement à griffes.
